# EUROPEAN PATENT SPECIFICATION

(11) **EP 3 588 093 B1**
(45) Date of publication and mention of the grant of the patent: **18.12.2024**
(21) Application number: 18757416.5
(22) Date of filing: 07.02.2018
(51) Int. Cl.: G01N 35/00, G01N 35/02, G01N 35/04

(54) **AUTOMATED ANALYZER**
AUTOMATISIERTER ANALYSATOR
ANALYSEUR AUTOMATISÉ

(30) Priority: 22.02.2017 JP 2017030700
(43) Date of publication of application: 01.01.2020
(73) Proprietor: Hitachi High-Tech Corporation, Minato-ku Tokyo 105-6409 (JP)
(72) Inventor: SAITO Yoshiaki, Tokyo 105-8717 (JP)
(74) Representative: MERH-IP Matias Erny Reichl Hoffmann Patentanwälte PartG mbB
(86) International application number: PCT/JP2018/004270
(87) International publication number: WO 2018/155190

(56) References cited:
- WO-A1-2013/103119
- JP-A- 2000 105 246
- JP-A- 2000 105 246
- JP-A- 2008 190 958
- JP-A- 2009 162 584
- JP-A- 2012 108 010
- JP-A- 2012 163 576
- JP-A- H09 325 150
- US-A1- 2014 356 233

## Description

### Technical Field

The present invention relates to an automatic analyzer for performing the qualitative/quantitative analysis of a biological sample such as blood and urine.

### Background Art

Patent Literature 1 discloses the automatic analyzer for the purpose of achieving efficient measurements. The disclosed automatic analyzer includes a first reagent disc on which a reagent container for storing the reagent used for reaction is mounted, a second reagent disc, and a reagent container carrier mechanism for carrying the reagent container between the first reagent disc and the second reagent disc. The determination unit and the drive control unit of the computer allow the reagent container carrier mechanism to carry the reagent container mounted on the second reagent disc to the first reagent disc. Using the reagent held in the reagent container carried to the first reagent disc, at least accuracy control measurement of operations including calibration and the accuracy control measurement is performed. The reagent container is returned to the second reagent disc by the reagent container carrier mechanism. Furthermore, PTL 2 discloses an automatic analyzer that analyzes biological samples, wherein the reagent preparation mechanism performs the preparation for the reagent loaded into the reagent storage unit in accordance with the determination made by the control unit. Eventually, PTL 3 discloses a buffer section for racks carrying samples to be transported in an automatic analyze which enables priority analysis of racks loaded earlier in the rack transfer line.

### Citation List

### Patent Literature

PTL 1: Japanese Unexamined Patent Application Publication No. 2013-217741
PTL 2: US 2014 356 233 A1
PTL 3: JP 2000 105 246 A

### Summary of Invention

### Technical Problem

The automatic analyzer is a device configured to add a reagent to a biological sample (hereinafter referred to as a specimen) such as urine and blood for reaction so as to perform measurements with respect to a plurality of inspection items. Multiple kinds of reagents are mounted on the automatic analyzer for the measurement. In facilities where many inspections are carried out in a day, or facilities where the system is operated for 24 hours, in the case of shortage of the reagent, the reagent has to be replaced while the system is temporarily suspended.

There has been a known automatic analyzer provided with hardware capable of loading or disposing the reagent during the inspection to allow the reagent to be newly added without suspending the system.

Although the reagent is newly added, the measurement using the reagent cannot be immediately performed unless the calibration curve effective for the reagent is available. In the above-described circumstance, preparation of the calibration curve (calibration) is necessary. During measurement of the specimen, loading of the reagent cannot be started until completion of dispensation of all reagents in the measurement. Furthermore, in order to execute calibration, the user has to wait for completion of loading the reagent.

Patent Literature 1 discloses that the standard solution required for the calibration is preliminarily mounted on the specimen disc so that the calibration is performed using the standard solution on the specimen disc after carrying the reagent to the reagent disc.

The method as disclosed in Patent Literature 1 needs the specimen disc as an indispensable component. It is difficult to implement the method for the large-scaled system for measurement of the specimen mounted on the rack.

In the case of using the rack, the analyzer may be provided with a buffer for holding all sorts of necessary standard solution and accuracy control samples on stand-by. However, the buffer is required to keep those specimens refrigerated. The specimens occupying the space of the buffer may cause another problem that the buffer has to be enlarged.

The present invention has been made in view of the above-described circumstances. It is therefore an object of the present invention to provide the automatic analyzer capable of promptly executing the calibration to the reagent to be registered during the measurement, and capable of lessening the process to be performed by the user until the reagent becomes available for measurement of the patient specimen.

### Solution to Problem

The above-mentioned problem is solved in accordance with the appended set of claims.

The present invention includes a plurality of components for solving the problem. For example, the automatic analyzer has a specimen and a reagent respectively dispensed, and reacted in a reaction vessel to measure a reaction liquid. The automatic analyzer includes a reagent disc on which a plurality of reagents are mountable, a reagent loader which executes a carry-in of the reagent into the reagent disc, an information acquisition unit which reads information of the reagent loaded in the automatic analyzer, a buffer which holds a plurality of specimens on stand-by, and is capable of changing an order of dispensing the specimens, and a control unit including a determination unit which determines requirement or non-requirement of the calibration executed to the loaded reagent when the information acquisition unit identifies the reagent, a request generation unit which makes a notice of a standard solution necessary for the calibration when the determination reagent, a request generation unit which makes a notice of the standard solution when the determination unit determines the requirement of the calibration, and generates a calibration request when the second information acquisition unit detects loading of the standard solution, and a planning unit which makes a plan to preferentially execute the carry-in of the reagent requiring calibration into the reagent disc, and the calibration to the reagent immediately after the carry-in, and to execute the carry-in of other reagents requiring no calibration into the reagent disc after the calibration.

### Advantageous Effects of Invention

The present invention is capable of promptly calibrating the reagent to be registered during the measurement without enlarging the buffer size. This makes it possible to lessen the process to be performed by the user until the reagent is made available for measurement of the patient specimen. Problems, structures and advantageous effects other than those described above will be clarified by explaining the following embodiments.

### Brief Description of Drawings

FIG. 1 is a view schematically showing an overall structure of an automatic analyzer according to an embodiment of the present invention.
FIG. 2 is a process flow for executing calibration in measuring the relevant standard solution immediately after the reagent registration.
FIG. 3 is a view showing a structure of a planning unit for planning carriage of the specimen, and registration of the reagent.
FIG. 4 is a view showing an example of a screen to be displayed on a display unit resulting from execution of a standard solution information display process.
FIG. 5 is a view showing an example of a screen for selectively setting a specimen dispensation condition.
FIG. 6 is a view showing another example of a structure of the planning unit.
FIG. 7 is a view showing an example of a screen for selecting execution/non-execution of controlling other structure of the planning unit as shown in FIG. 6.

### Description of Embodiment

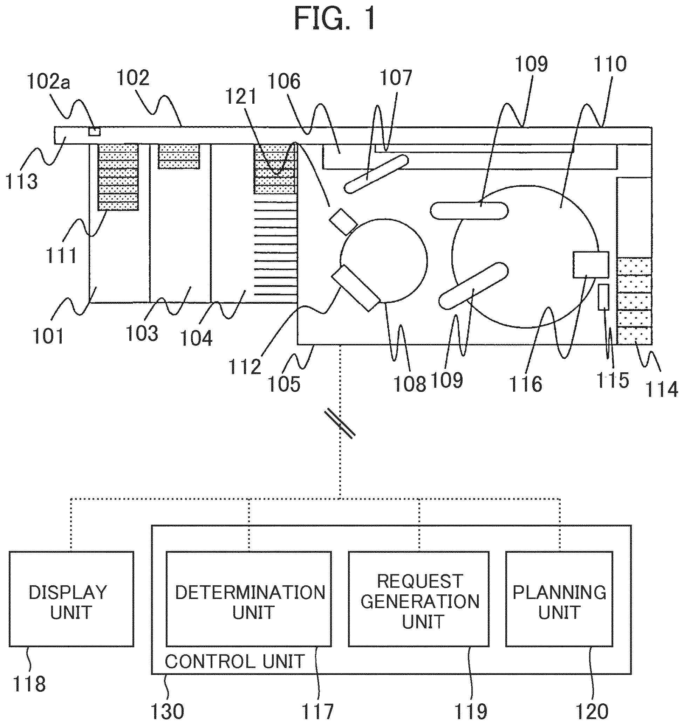

An embodiment of an automatic analyzer according to the present invention will be described referring to FIGS. 1 to 7. An overall structure of the automatic analyzer will be described referring to FIG. 1. FIG. 1 is a view schematically showing an overall structure of the automatic analyzer.

In this embodiment, the "reagent registration" is a general term representing a series of the process of loading the reagent into the automatic analyzer, reading/registering information of the loaded reagent, and carrying the reagent into the reagent disc for storing the reagents.

Referring to FIG. 1, the automatic analyzer has the specimen and the reagent respectively dispensed into a reaction vessel so as to be reacted, and measures the reaction liquid. The automatic analyzer includes a carry-in unit 101, an emergency rack inlet 113, a rack carrier line 102, a buffer 104, an analysis unit 105, a storage unit 103, a display unit 118, a control unit 130, and the like.

The carry-in unit 101 accommodates a sample rack 111 in which a plurality of sample vessels for storing biological samples such as blood and urine are placed. The emergency rack inlet 113 allows loading of a sample rack (calibration rack) on which the standard solution is mounted, and the sample rack 111 having sample vessels which store the specimens requiring emergency analysis into the analyzer. The rack carrier line 102 serves to carry the sample rack 111 placed in the carry-in unit 101. The buffer 104 holds the multiple sample racks 111 carried by the rack carrier line 102 so that the dispensing order of the specimens in the sample rack 111 is modifiable. The analysis unit 105 analyzes the specimen which has been carried from the buffer 104 via a conveyor line 106 to be described below in detail. The storage unit 103 stores the sample rack 111 in which the sample vessel holding the specimen that has been analyzed by the analysis unit 105 is stored.

The analysis unit 105 includes the conveyor line 106, a reaction disc 108, a sample dispensation nozzle 107, a reagent disc 110, a reagent dispensation nozzle 109, a cleaning mechanism 112, a reagent tray 114, a reagent ID reader 115, a reagent loader 116, a spectrophotometer 121, and the like.

The conveyor line 106 serves to carry the sample rack 111 in the buffer 104 into the analysis unit 105. The reaction disc 108 includes a plurality of reaction vessels. The sample dispensation nozzle 107 is driven by rotation or vertical motion to dispense the specimen from the sample vessel to the reaction vessel on the reaction disc 108. A plurality of reagents are mounted on the reagent disc 110. The reagent dispensation nozzle 109 dispenses the reagent from the reagent bottle in the reagent disc 110 into the reaction vessel of the reaction disc 108. The cleaning mechanism 112 cleans the reaction vessel of the reaction disc 108. The spectrophotometer 121 measures the light transmitted from the light source (not shown) via the reaction liquid of the reaction vessel so that the absorbance of the reaction liquid is measured.

The reagent tray 114 holds the reagent placed thereon so as to be registered into the automatic analyzer. The reagent ID reader 115 serves to acquire the reagent information by reading a reagent ID given to the reagent on the reagent tray 114. The automatic analyzer of the embodiment is configured to have the reagent ID reader 115 disposed outside the reagent disc 110 instead of being disposed inside the reagent disc 110. The reagent loader 116 carries the reagent into the reagent disc 110.

The display unit 118 displays an analysis result of a predetermined component concentration in the liquid sample such as blood and urine. The display unit 118 displays the information on the standard solution required for the user if the determination unit 117 of the control unit 130 to be described later determines that the calibration is required.

The control unit 130 as the computer and the like controls operations of the respective mechanisms in the automatic analyzer, and executes arithmetic process to obtain the predetermined component concentration of the specimen such as blood and urine. The control unit 130 includes the determination unit 117, a request generation unit 119, and a planning unit 120.

When the reagent is recognized by the reagent ID reader 115, the determination unit 117 determines whether or not calibration of the loaded reagent is required depending on availability of the effective calibration curve of the other reagent in reference to the reagent ID read by the reagent ID reader 115.

When the determination unit 117 determines that the calibration is required, the request generation unit 119 outputs a display signal for notifying about the standard solution necessary for the calibration on the display unit 118 or the like. In the case where provision of the standard solution in the device has been recognized by the user from a sample rack ID reader 102a of the rack carrier line 102, the request generation unit further generates a calibration analysis request.

The planning unit 120 makes a plan to register the reagent while suspending the plan of dispensing a new specimen after reading the reagent ID by the reagent ID reader 115, and further makes a plan to carry a standard solution into the analysis unit 105 while passing the rack stored in the buffer 104 upon reception of an analysis request from the request generation unit 119. As a result, a plan of carry-in and calibration is implemented as required by allowing execution of the calibration immediately after the carry-in of the reagent into the reagent disc 110. The detailed explanation will be described later.

The overall structure of the automatic analyzer has been described as above.

The analysis process to the specimen will be generally executed by the automatic analyzer generally in accordance with the order as described below.

The sample rack 111 placed in the carry-in unit 101 or the emergency rack inlet 113 is carried into the randomly accessible buffer 104 by the rack carrier line 102.

In accordance with a priority rule, the automatic analyzer carries the sample rack with the highest priority among those stored in the buffer 104 into the analysis unit 105 by the conveyor line 106.

The conveyor line 106 further transfers the sample rack 111 which has reached the analysis unit 105 to a specimen portioning position near the reaction disc 108. The sample dispensation nozzle 107 portions the specimen into the reaction vessel on the reaction disc 108. The sample dispensation nozzle 107 portions the specimen necessary number of times in accordance with the number of requested analysis items of the specimen.

The sample dispensation nozzle 107 portions the specimen to all the sample vessels mounted on the sample rack 111. The sample rack 111 in which the portioning process applied to all the sample vessels is finished is transferred to the buffer 104 again. The sample rack 111 having all the specimen portioning process finished as well as the automatic re-examination is transferred to the storage unit 103 by the conveyor line 106 and the rack carrier line 102.

The reagent to be used for analysis is portioned to the reaction vessel which has received the portion of the specimen earlier from the reagent bottle on the reagent disc 110 through the reagent dispensation nozzle 109. Subsequently, a stirring mechanism (not shown) stirs the liquid mixture of the specimen and the reagent in the reaction vessel.

Light ray emitted from the light source is allowed to transmit the reaction vessel filled with the liquid mixture which has been stirred so that luminous intensity of the transmission light is measured by the spectrophotometer 121. The luminous intensity measured by the spectrophotometer 121 is transmitted to the control unit 130 via an A/D converter and an interface. The control unit 130 executes an arithmetic process to obtain the predetermined component concentration of the liquid sample such as blood and urine. The result is displayed on the display unit 118 or the like, and stored in the storage unit (not shown).

When the reagent registration is performed, the automatic analyzer allows the reagent ID reader 115 to read the reagent ID of the reagent placed on the reagent tray 114, and allows the reagent loader 116 to carry the reagent into the reagent disc 110.

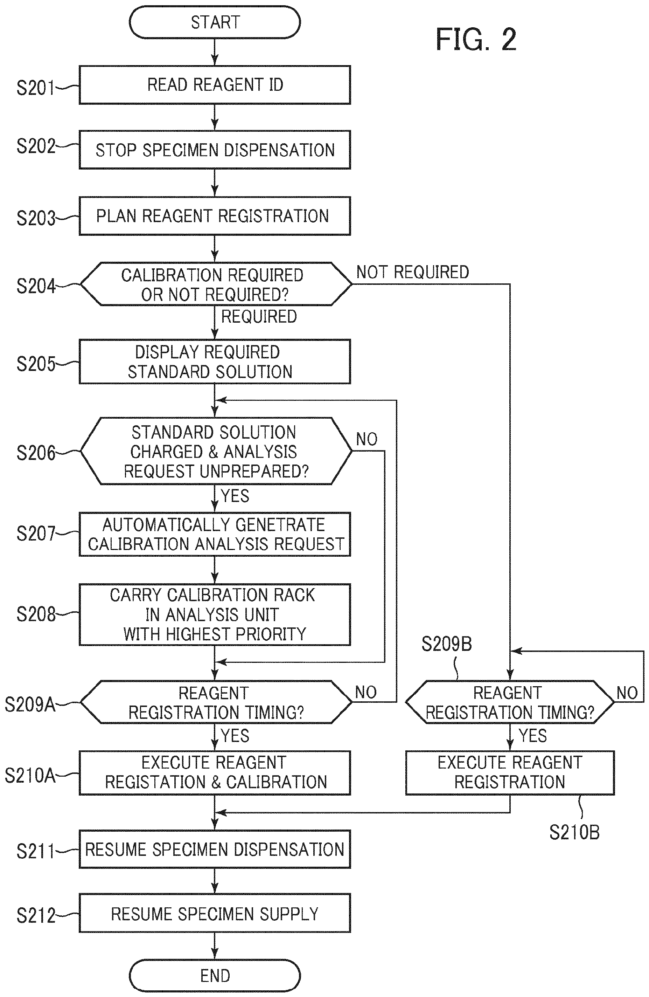

An explanation will be made with respect to an example of the process executed in the control unit 130 of the automatic analyzer until measurement of the relevant standard solution immediately after the reagent registration in reference to the flow as shown in FIG. 2. FIG. 2 shows a process flow for executing calibration as required for measuring the relevant standard solution immediately after the reagent registration.

The user presses a reagent registration button on the display unit 118 or disposed at a predetermined position in the automatic analyzer so that the control unit 130 moves the reagent tray 114 to a position which allows placement of the reagent bottle. After placing the reagent on the reagent tray 114, the user presses the reagent registration button on the display unit 118 or disposed in the automatic analyzer to instruct start of the reagent registration. The control unit 130, thus starts the reagent registration process.

When the reagent registration is started, the control unit 130 of the automatic analyzer moves the reagent on the reagent tray 114 to a position corresponding to the reagent ID reader 115 so that the reagent ID is read in a reagent ID reading process (step S201). If the reagent ID has abnormality, no further process is executed, and a warning message is displayed on the display unit 118 or the like. The process then ends.

The control unit 130 suspends the dispensing plan of the specimen subsequent to the one which is currently dispensed to secure the time zone in which the reagent disc 110 is not operated in a specimen dispensation stop process (step S202).

Then the control unit 130 executes a reagent registration planning process (step S203). Operations of the reagent disc 110 are reserved ahead of a predetermined time period for pursuit of the measurement which has been started. For example, if the reagent dispensation is reserved six minutes later for pursuing the measurement which has been started just before execution of the specimen dispensation stop process, the reagent cannot be registered because the control to the reagent disc 110 is also reserved six minutes later. In the reagent registration planning process step S203, operations of the reagent disc 110 are preliminarily reserved so that the reagent is registered in the time zone six minutes later and onward in the specimen dispensation stop process step S202.

The control unit 130 determines whether or not execution of calibration is required in a calibration requirement/non-requirement determination process (step S204) in reference to the reagent ID information. For example, if the function is available to allow the use of the calibration curve derived from the calibration which has been executed to the reagent in the same lot, the calibration to the reagent to be registered is not required. With the above-described function, the control unit 130 determines whether one or more reagents requiring calibration exist among those to be registered. If it is determined that the calibration is required, the process proceeds to step S205. If it is determined that the calibration is not required, the process proceeds to step S209B.

An explanation will be made hereinafter with respect to the process after determination that the calibration is required in the calibration requirement/non-requirement determination process step S204, that is, the process to be executed subsequent to the case where one or more reagents requiring calibration are placed on the reagent tray 114 (step S205 and subsequent steps).

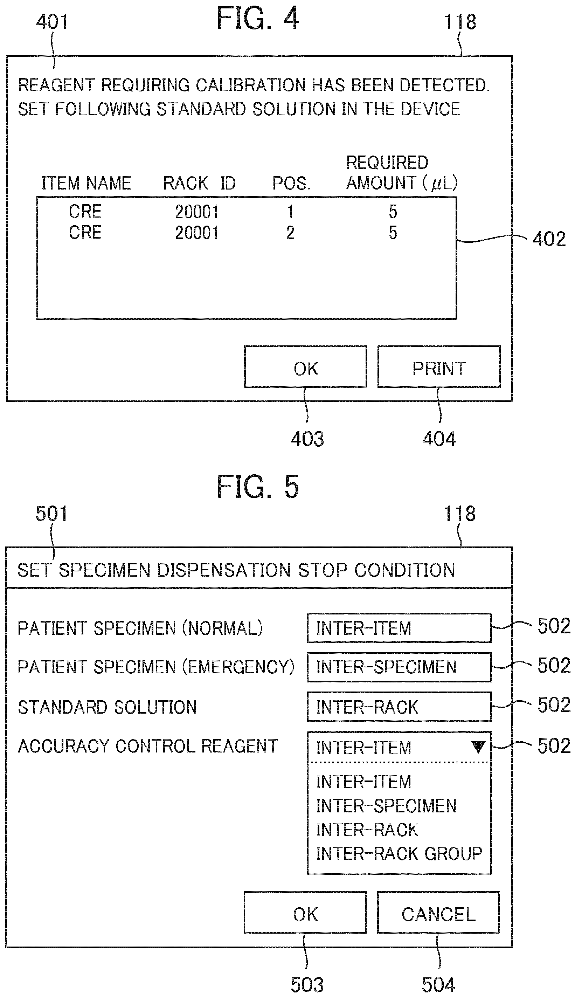

In a standard solution information display process (step S205), the control unit 130 outputs a display signal to display all information on the standard solution necessary for the reagent that requires calibration on the display unit 118. Detailed explanation will be described later referring to FIG. 4.

In a standard solution monitoring process (step S206), the control unit 130 monitors whether the necessary standard solution has been loaded by the user, and whether the analysis request has not been generated. Loading of the necessary standard solution may be monitored in the manner as described below. That is, after the user places the sample rack (calibration rack) having the standard solution mounted in the carry-in unit 101 or the emergency rack inlet 113, the ID is identified by such device as the sample rack ID reader 102a while passing the rack carrier line 102. Then the request generation unit 119 in the control unit 130 confirms that all the standard solutions coincide with those displayed in the standard solution information display process step S205. If it is determined that the standard solution has been loaded, and the analysis request has not been generated, the process proceeds to step S207. If it is determined that the standard solution has not been loaded, or the analysis request has been generated, the process proceeds to step S209A.

If it is recognized that the necessary standard solution has been loaded, and the analysis request (calibration request) to the standard solution has not been generated, the control unit 130 automatically generates the analysis request to the corresponding standard solution in an analysis request generation process (step S207).

The control unit 130 executes a calibration rack carry process (step S208). In the calibration rack carry process step S208, the calibration rack recognized as being carried among the sample racks 111 on stand-by in the buffer 104 will be carried into the analysis unit 105 with the highest priority. The calibration rack carried into the analysis unit 105 is kept stand-by until resumption of the specimen dispensation after completing the reagent registration.

In the reagent registration stand-by process (step S209A), the control unit 130 determines whether or not the reagent registration timing has arrived. Then carry-in of the reagent into the reagent disc 110 is kept stand-by until arrival of the time reserved in the reagent registration planning process step S203. Upon arrival of the reserved time, the control unit 130 executes the reagent registration execution process and the calibration execution process step S210A. If it is determined that the reagent registration timing has not arrived yet, the process returns to step S206.

In the reagent registration execution process and the calibration execution process (step S210A), the control unit 130 allows the reagent loader 116 to carry all the reagents placed on the reagent tray 114 into the reagent disc 110. The calibration is performed immediately after the carry-in.

In the standard solution monitoring process step S206, even if loading of the necessary standard solution has not been recognized, it is preferable to proceed the process in the reagent registration stand-by process step S209A upon arrival of the time reserved in the reagent registration planning process step S203 so as to execute the reagent registration execution process and the calibration execution process step S210A without waiting for the carry-in of the calibration rack. In the above-described circumstances, execution of the calibration may be omitted in step S210A.

Thereafter, the control unit 130 resumes the specimen dispensation in a specimen dispensation resuming process (step S211), and resumes supply of other racks on stand-by in the buffer 104 in a specimen supply resuming process (step S212). Resuming the specimen dispensation at this stage allows analysis of the standard solution which has been carried into the analysis unit 105 in the calibration rack carry process step S208 immediately after the specimen registration. The specimen dispensation resuming process step S211 transfers the calibration rack having the portioning finished to the storage unit 103, and resumes the carry-in of the sample rack 111 on stand-by in the buffer 104 into the analysis unit 105.

If the automatic analyzer is capable of placing multiple sample racks 111 in the analysis unit 105, it is possible to resume the carry-in of the sample racks 111 on stand-by in the buffer 104 immediately after transferring all the calibration racks having the necessary standard solutions mounted in the calibration rack carry process step S208 to the analysis unit 105.

An explanation will be made with respect to the process to be executed after it is determined in the calibration requirement/non-requirement determination process step S204 that the calibration is not required, that is, all the reagents placed on the reagent tray 114 do not require calibration.

In the above-described case, the control unit 130 determines whether or not the reagent registration timing has arrived in the reagent registration stand-by process (step S209B). The carry-in to the reagent to the reagent disc 110 is kept stand-by until arrival of the time reserved in the reagent registration planning process step S203. Upon arrival of the reserved time, the control unit executes a reagent registration execution process step S210B. If it is determined that the reagent registration timing has not arrived, the control unit repeatedly executes the process in step S209B until arrival of the reagent registration timing.

The control unit 130 allows the reagent loader 116 to carry all the reagents placed on the reagent tray 114 into the reagent disc 110 in the reagent registration execution process (step S210B). The planning unit 120 executes the specimen dispensation resuming process step S211 and the specimen supply resuming process step S212.

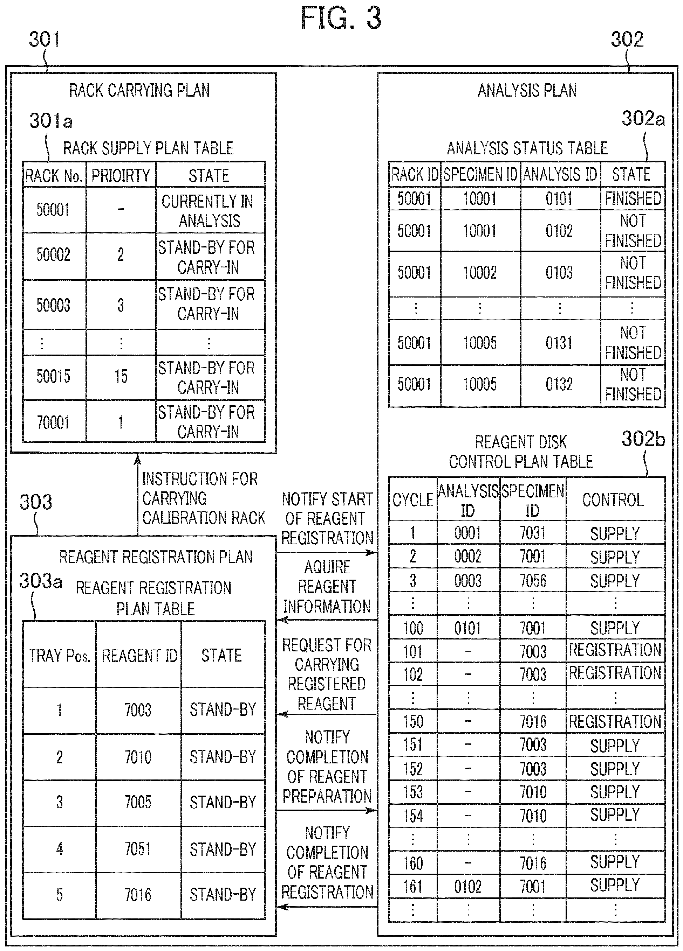

An explanation will be made with respect to a structure of the planning unit for executing the control as shown in FIG. 2, and the process flow referring to FIG. 3. FIG. 3 is a view showing an example of the detailed structure of the planning unit 120.

As FIG. 3 shows, the planning unit 120 includes a rack carry planning unit 301, an analysis planning unit 302, and a reagent registration planning unit 303.

The rack carry planning unit 301 includes a rack supply planning table 301a for controlling information on the sample racks 111 in the buffer 104 and the analysis unit 105, and determines the next sample rack 111 to be supplied to the analysis unit 105. The rack carry planning unit 301 of the embodiment is configured to give the highest priority to the calibration rack (rack No. 70001 shown in FIG. 3) having the standard solution mounted thereon, which has been loaded into the automatic analyzer as shown in FIG. 3.

The analysis planning unit 302 includes an analysis status table 302a which controls the specimen dispensation status of the specimen placed on the sample rack 111 in the analysis unit 105, and a reagent disc control planning table 302b which controls a control planning status of the reagent disc 110. The analysis planning unit 302 instructs the sample dispensation nozzle 107 and the reagent disc 110 to perform the specimen dispensation and the reagent supply in accordance with the plan.

It is assumed that the specimen with rack ID 50001, specimen ID 10001, analysis ID 0101 as shown in the analysis status table 302a is currently in the dispensation process when the reagent ID reader 115 reads the reagent ID. In the above-described state, the analysis planning unit 302 of the embodiment temporarily suspends the dispensation plan of the specimen to be dispensed subsequent to the one currently in the dispensation process (the specimen dispensing plan of the specimen with rack ID 50001, specimen ID 10001, analysis ID 0102, and subsequent specimens as shown in the analysis status table of FIG. 3) so as to secure a time zone where operations of the reagent disc 110 are interrupted. After analyzing the specimen with rack ID 50001, specimen ID 10001, analysis ID 0101 as shown in the reagent disc control planning table 302b, a plan is made to register the reagents with reagent IDs 7003 to 7016. In the above-described manner, the analysis is replanned to execute analysis of the specimen with rack ID 50001, specimen ID 10001, analysis ID 0102, and subsequent specimens.

The reagent registration planning unit 303 controls information on the reagent placed on the reagent tray 114 based on the reagent registration planning table 303a until completion of the reagent registration.

The process to be executed by the planning unit 120 will be described.

The planning unit 120 allows the reagent registration planning unit 303 to instruct the reagent tray 114 and the reagent ID reader 115 to be operative in the reagent ID reading process step S201, and stores the read reagent ID information in the reagent registration planning table 303a. The determination unit 117 is notified of the information of the reagent ID, and the analysis planning unit 302 is also notified of start of the reagent registration.

Upon reception of the notice from the reagent registration planning unit 303, the analysis planning unit 302 suspends the new dispensing plan in the specimen dispensation stop process step S202. The example in FIG. 3 shows that after completion of dispensation with analysis ID 0101, the dispensation with analysis ID 0102 has not been done. As the dispensation with analysis ID 0101 has been completed, the analysis planning unit 302 reserves supply of the reagent with ID 7001 to be used in the 100th cycle as shown in the reagent disc control planning table 302b. However, as the dispensing plan of the subsequent specimen is suspended, supply of the subsequent reagent is also stopped. As the analysis planning unit 302 controls so as not to execute the next dispensation with analysis ID 0102, the control for analyzing the reagent disc 110 is not executed at the 101st cycle onward. Therefore, it is possible to allow the reagent disc control planning table 302b to secure the vacancy for the reagent disc control in the 101st cycle onward.

The cycle refers to the time period necessary for the sample dispensing nozzle 107 to dispense the specimen for the single measurement.

In the example as shown in FIG. 3, the explanation has been made with respect to the control for stopping the specimen dispensation immediately after reading the reagent ID. The timing for stopping the specimen dispensation is not limited to the example as described above, but may be determined by the user. For example, the specimen dispensation may be continued until the end of analysis on all items set to the specimen in the reading process, until completion of dispensing all specimens stored in the sample rack 111 that is the same as the one storing the specimen in the reading process, or until completion of the specimen dispensation among the same rack groups. The structure which allows the user to determine the stop timing will be described later referring to FIG. 5.

In the reagent registration planning step S203, the analysis planning unit 302 receives information on the reagent to be registered from the reagent registration planning unit 303, calculates the number of cycles for controlling the reagent disc 110 for reagent registration based on the information such as the number of reagents to be registered, and inputs reservation to the reagent disc control planning table 302b. Assuming that 10 cycles are required for registering the single reagent, and five reagents are placed, the zone from the 101st cycle to the 150th cycle is reserved.

After placing and storing the calibration rack with the standard solution in the buffer 104, in the reagent registration stand-by process step S208, the analysis planning unit 302 refrains from instructing the reagent disc 110 to control reagent supply in accordance with the reagent disc control planning table 302b until arrival of the timing for starting reagent registration.

In the example as shown FIG. 3, the reagent registration starts in the 101st cycle. When the process reaches the 101st cycle, the analysis planning unit 302 sends a registration reagent transfer request to the reagent registration planning unit 303 in the reagent registration execution process and the calibration execution process step S210A, or in the reagent registration execution process step S210B.

The reagent registration planning unit 303 instructs the reagent tray 114 to move the reagent at a tray position 1 to the position of the reagent loader 116, and sends a notice about completion of reagent preparation to the analysis planning unit 302 at the timing when the movement is completed. The analysis planning unit 302 instructs the reagent loader 116 and the reagent disc 110 to execute the reagent registration so that the reagent is registered. Under the reagent registration control, the reagent disc 110 is activated to move a vacant position which accommodates the reagent to the reagent registration position, and the reagent loader 116 is activated to move the reagent on the reagent tray 114 to the vacant position of the reagent disc for placement.

After completion of the reagent registration, the analysis planning unit 302 sends the reagent registration completion notice to the reagent registration planning unit 303 so that the state in the reagent registration planning table 303a is updated to a registered state. The reagent registration planning unit 303 executes the reagent registration until all the reagents on the reagent tray 114 are updated to the registered state.

After completion of registering all reagents, in the calibration rack carry process and calibration execution process step S210, the reagent registration planning unit 303 sends a calibration rack carry instruction to the rack carry planning unit 301, and executes registration from the 101st cycle to the 150th cycle. The rack carry planning unit 301 carries the calibration rack into the analysis unit 105 in preference to all the sample racks 111 in the buffer 104. After the carry-in, in the calibration rack carry process and calibration execution process step S210, the reagent registration planning unit 303 instructs execution of calibration so that the calibration is executed from the 151st cycle to 160th cycle. As the calibration process executed in the analysis unit 105 is the same as the one executed in the analysis unit of the generally employed automatic analyzer, detailed explanation of the process will be omitted.

After the end of calibration in the 160th cycle, the reagent registration planning unit 303 resumes the analysis ID 0102 which has been suspended from the 161st cycle.

FIG. 4 shows an example of the screen to be displayed on the display unit 118 in the standard solution information display process step S205.

If it is determined in the calibration requirement/non-requirement determination process step S204 that the calibration is required, a standard solution information display window 401 is displayed on the display unit 118.

The standard solution information display window 401 includes a standard solution information list 402 so as to display a name of item which requires calibration, an ID of the rack having the standard solution, a position on the rack, and a required amount. The name and ID of the standard solution may be displayed on the standard solution information list 402.

When the user presses an OK button 403 on the standard solution information display window 401, the window will be closed. Alternatively, it is possible to automatically close the window if the user recognizes a calibrator provided by the user instead of providing the OK button 403. When the user presses a print button 404 on the standard solution information display window 401, contents of the standard solution information list 402 will be printed.

FIG. 5 shows an example of a timing setting change screen to be displayed when changing the timing for stopping the specimen dispensation in the specimen dispensation stop process step S202.

A specimen dispensation stop condition setting screen 501 displayed on the display unit 118 includes a timing set area 502 where the timing for stopping the specimen dispensation may be set at the start of reagent registration during dispensation in the analysis unit 105 in accordance with the type of the specimen in the dispensing process, that is, for each patient specimen (normal), each patient specimen (emergency), each standard solution, and each accuracy control sample. The timing may be selected from an inter-item, an inter-specimen, an inter-rack, and an inter-rack group.

If the stop timing is set to the inter-item, the analysis planning unit 302 stops dispensation subsequent to the reagent registration start timing. If the stop timing is set to the inter-specimen, the dispensation is stopped at the timing when dispensations of all specimens in the dispensing process are completed. If the stop timing is set to the inter-rack, the dispensation is stopped at the timing when dispensations in the sample rack 111 having all the specimens currently in the dispensation process are completed. The rack group refers to a plurality of sample racks 111 intended to have the standard solution and the accuracy control sample sequentially measured by the user. If the inter-rack group is selected for the stop timing, the new dispensation is stopped after completion of dispensations of the multiple calibration racks or control racks simultaneously placed by the user.

With the above-described structure, in the case of setting the inter-rack timing for the "patient specimen (emergency)", interruption of the reagent registration may prevent delay in reporting the result of the emergency specimen. In the case of the multiple analysis units, the emergency specimen may be released from restriction to the analysis unit in the reagent registration process through transfer to another analysis unit. This makes it possible to flexibly execute the analysis planning.

The specimen dispensation stop condition setting screen 501 includes an OK button 503. When the user presses the button, the specimen dispensation stop control will be executed at the selected timing. The screen also includes a cancel button 504 to be selected when finishing change in the timing setting.

A selection unit is constituted by the timing set area 502 and the OK button 503 to select the timing for stopping reagent dispensation so as to carry the reagent into the reagent disc 110.

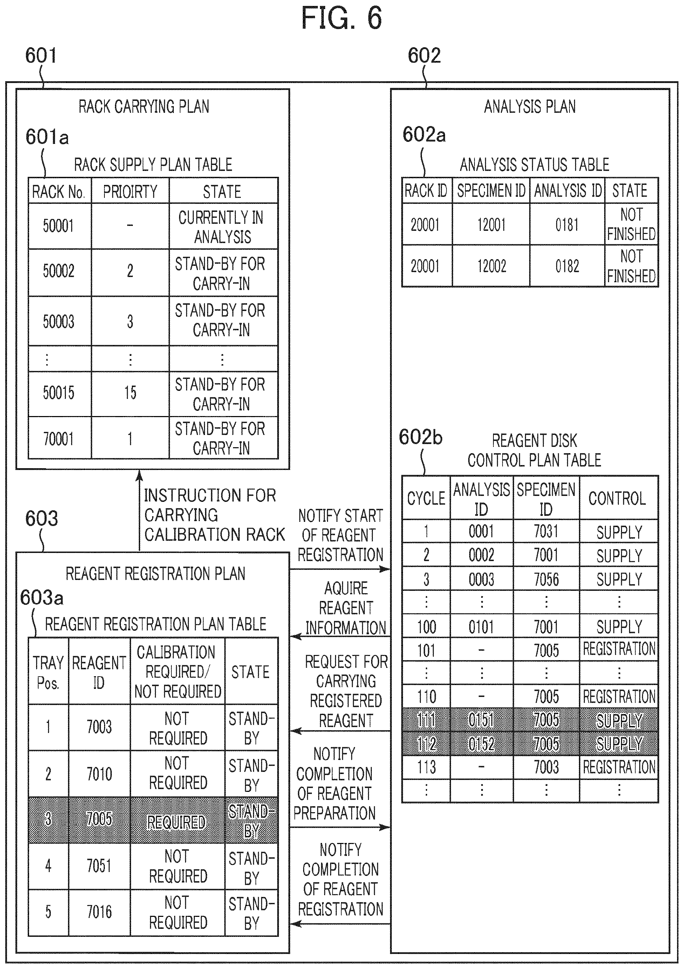

Another example of structure of the planning unit 120 will be described referring to FIG. 6. FIG. 6 shows another example of the detailed structure of the planning unit 120.

Another structure of the planning unit 120 as shown in FIG. 6 makes a plan to preferentially carry the reagent requiring calibration into the reagent disc 110 for calibration, and to carry the other reagent into the reagent disc 110 after the calibration.

In more detail, as FIG. 6 shows, a reagent registration planning unit 603 stores calibration requirement/non-requirement information in a reagent registration planning table 603a, and makes a plan to preferentially register the reagent requiring calibration. Referring to the example of FIG. 6, it is assumed that among reagents placed on the reagent tray 114, the reagent with reagent ID 7005 requires calibration, and the other reagents do not require calibration.

In this case, the reagent registration planning unit 603 sends a notice of starting registration of the reagent with reagent ID 7005 to an analysis planning unit 602.

The analysis planning unit 602 instructs the reagent loader 116 and the reagent disc 110 to execute the reagent registration control to make a plan for implementing the reagent supply for calibration in the 111th and 112th cycles in a reagent disc control planning table 602b so that the calibration of the reagent with ID 7005 is started immediately after the end of the control. The analysis planning unit 602 further makes a plan to register the other reagents which do not require calibration after supplying the reagent for calibration.

A rack supply planning table 601a of the rack carry planning unit 601, and an analysis status table 602a of an analysis planning unit 602 have substantially the same structures as those of the rack supply planning table 301a of the rack carry planning unit 301, and the analysis status table 302a of the analysis planning unit 302 as shown in FIG. 3, respectively.

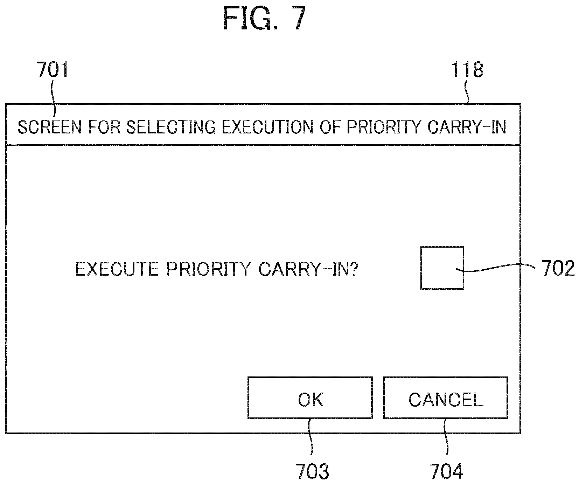

The structure which allows the reagent requiring calibration to be preferentially carried into the reagent disc 110 for calibration as shown in FIG. 6 may be provided with a component which selects execution/non-execution of the preferential carry-in and calibration of the reagent requiring calibration upon reagent registration. A structure of the above-described component will be described referring to FIG. 7. FIG. 7 shows an example of the screen for selecting execution/non-execution of the preferential carry-in and calibration.

As FIG. 7 shows, the display unit 118 displays a preferential carry-in execution selection screen 701. The preferential carry-in execution selection screen 701 includes a checkbox 702 for selecting execution/non-execution of the preferential carry-in and calibration of the reagent requiring calibration upon reagent registration, an OK button 703, and a cancel button 704. In the case of preferential carry-in and calibration of the reagent requiring calibration upon reagent registration, the checkbox 702 is checked, and the OK button 703 is selected. If the preferential carry-in is not executed, the checkbox 702 is unchecked. The checkbox 702 and the OK button 703 constitute the selection unit which allows selection of execution/non-execution of the preferential carry-in and calibration of the reagent requiring calibration.

Advantageous effects of the embodiment will be described.

The automatic analyzer according to the present invention includes the reagent disc 110 on which the plurality of reagents are mountable, the reagent loader 116 which executes the carry-in of the reagent into the reagent disc 110, the reagent ID reader 115 which reads information of the reagent loaded in the automatic analyzer, the buffer 104 which holds the plurality of specimens on stand-by, and is capable of changing an order of dispensing the specimens, and the control unit 130 including the determination unit 117 which determines requirement or non-requirement of the calibration executed to the loaded reagent when the reagent ID reader 115 identifies the reagent, the request generation unit 119 which makes a notice of a standard solution necessary for the calibration when the determination unit 117 determines requirement of the calibration, and generates a calibration request when loading of the standard solution is detected, and the planning unit 120 which makes a plan of the carry-in and the calibration to execute the calibration as required immediately after the carry-in of the reagent into the reagent disc 110.

The above-described structure secures the time required to carry the reagent into the reagent disc 110 at a timing as early as possible so as to achieve the earliest possible carry-in of the reagent as well as the calibration. Therefore, a series of the process up to the calibration of the reagent to be registered may be accelerated to lessen the process performed by the user until the reagent becomes available for measurement of the patient specimen. The size of the buffer does not have to be enlarged.

When the reagent ID reader 115 identifies the reagent, the planning unit 120 of the control unit 130 suspends a plan for dispensing the specimen, and makes a plan for executing the carry-in of the reagent into the reagent disc 110 and the calibration subsequent to the suspended plan for dispensing the specimen. The time for carrying the reagent into the reagent disc 110 at the start of registration of the reagent, and executing the calibration may be secured as early as possible, resulting in prompt execution of the process up to the calibration. This makes it possible to complete necessary operations without waiting for completion of the reagent registration, thus lessening the process to be performed by the user.

The automatic analyzer includes the display unit 118 which displays information of the necessary standard solution for notifying a user of the standard solution. This allows the user to easily obtain the information on the necessary standard solution for calibration, and to load the standard solution into the device immediately. It is possible to further reduce the time period taken for making the reagent available. It is also possible to further lessen the process to be performed by the user.

The automatic analyzer further includes the timing set area 502 and the OK button 503 for selecting the timing at which dispensation of the specimen is stopped for the carry-in of the reagent into the reagent disc 110. In the case of setting the inter-rack timing for the "patient specimen (emergency)", for example, interruption of the reagent registration may prevent delay in reporting the result of the emergency specimen. In the case of the multiple analysis units, the emergency specimen may be released from restriction to the analysis unit in the reagent registration process through transfer to another analysis unit. This makes it possible to reduce the burden to the user.

The planning unit 120 makes a plan to preferentially execute the carry-in of the reagent requiring calibration into the reagent disc 110, and the calibration, and to execute the carry-in of other reagents into the reagent disc 110 after execution of the calibration. Generally, a predetermined time period is necessary for the process from the calibration to the actual use of the reagent because of the need of generating the calibration curve. In this case, the reagent requiring calibration is carried into the reagent disc 110 for calibration in preference to the reagent requiring no calibration. This makes it possible to preferentially register the reagent requiring calibration to generate the calibration curve further promptly. It is possible to further reduce the time period elapsing until the start of using the reagent.

The automatic analyzer further includes the checkbox 702 and the OK button 703 for selecting execution or non-execution of the preferential carry-in and calibration of the reagent requiring the calibration. It is therefore possible to flexibly operate the device.

The reagent ID reader 115 is disposed outside the reagent disc instead of being disposed inside the reagent disc. It is therefore possible to simplify the structure of the reagent disc 110.

### <Others>

The present invention is not limited to the above-described embodiment, but may be variously modified and applied. The embodiment has been described in detail for easy understanding of the present invention which is not necessarily limited to the one including all the structures as disclosed above.

In the case of the automatic analysis having a function to take over not only the standard solution but also the previously measured calibration curve after the reagent registration, and to use the calibration curve that has been taken over, the control operation executed by the control unit 130 according to the present invention is applicable to the accuracy control sample.

The sample rack 111 does not have to be of type in which a plurality of specimen vessels are provided. For example, the above-described rack may be the rack (single holder) configured to accommodate only the single specimen vessel.

### List of Reference Signs

101: carry-in unit,
102: rack carrier line,
102a: reader,
103: storage unit,
104: buffer,
105: analysis unit,
106: conveyor line,
107: sample dispensation nozzle,
108: reaction disc,
109: reagent dispensation nozzle,
110: reagent disc,
111: sample rack,
112: cleaning mechanism,
113: emergency rack inlet,
114: reagent tray,
115: reagent ID reader,
116: reagent loader,
117: determination unit,
118: display unit,
119: request generation unit,
120: planning unit,
121: spectrophotometer,
130: control unit,
130: control unit,
301, 601: rack carry planning unit,
301a, 601a: rack supply planning table,
302, 602: analysis planning unit,
302a, 602a: analysis status table,
302b, 602b: reagent disc control planning table,
303, 603: reagent registration planning unit,
303a, 603a: reagent registration planning table,
401: standard solution information display window,
402: standard solution information list,
403, 503, 703: OK button,
404: print button,
501: specimen dispensation stop condition setting screen,
502: timing set area,
504, 704: cancel button,
701: preferential carry-in execution selection screen
702: checkbox

## Claims

1. An automatic analyzer, wherein a specimen and a reagent are respectively dispensed into a reaction vessel, wherein the specimen and the reagent are caused to react to measure a reaction liquid, comprising:
a buffer (104) for holding a plurality of sample racks (111), wherein the plurality of sample racks (111) is adapted to store a plurality of specimens in sample vessels on stand-by;
a carrier line (102) for carrying the plurality of sample racks (111) to the buffer (104), wherein
the buffer (104) is adapted to hold the plurality of sample racks (111) carried by the rack carrier line (102) so that a dispensing order of the specimens in the sample racks (111) is modifiable, and
the carrier line (102) comprises a sample rack ID reader (102a);
an analysis unit (105) configured to analyze the specimen, comprising:
a reagent disc (110) on which a plurality of reagents stored in reagent bottles are mountable,
a reagent tray (114) for holding a reagent bottle,
an information acquisition unit (115) configured to acquire reagent information by reading a reagent ID given to the reagent bottle loaded on the reagent tray (114),
a reagent loader (116) configured to execute a carry-in of the reagent bottle loaded on the reagent tray (114) into the reagent disc (110),
a reaction disc (108) including a plurality of reaction vessels,
a reagent dispensation nozzle (109) for dispensing the reagent from the reagent bottle in the reagent disc (110) into a reaction vessel of the reaction disc (108), and
a sample dispensing nozzle (107) is configured to be driven by rotation or vertical motion to dispense the specimen from the sample vessel to the reaction vessel on the reaction disc (108);
a conveyor line (106) for carrying a sample rack (111) from the buffer (104) into the analysis unit (105);
a display unit (118); and
a control unit (130) including:
a determination unit (117) configured to determine whether or not calibration of the loaded reagent is required when the information acquisition unit (115) identifies the reagent,
a request generation unit (119) configured to notify, by the display unit (118), that a standard solution is required for the calibration when the determination unit (117) determines requirement of the calibration, and to generate a calibration request when loading into the automatic analyzer of a calibration rack having the standard solution, has been recognized by the user from the sample rack ID reader (102a), and
a planning unit (120) configured to plan the carry-in and the calibration, and to execute the calibration, if required, immediately after the carry-in of the reagent bottle into the reagent disc (110), wherein
the planning unit (120) includes a rack carry planning unit (301), wherein
the rack carry planning unit (301) includes a rack supply planning table (301a) for controlling information on the plurality of sample racks (111) in the buffer (104) and the analysis unit (105), wherein the rack carry planning unit (301) is configured to determine the sample rack (111) of the plurality of sample racks (111) to be supplied next to the analysis unit (105), and
wherein the planning unit (120) is configured to give highest priority for analyzing to the calibration rack for being supplied to the analysis unit (105).

## Patentansprüche

1. Automatischer Analysator, wobei eine Probe und ein Reagens jeweils in ein Reaktionsgefäß abgegeben werden, wobei die Probe und das Reagens zur Reaktion gebracht werden, um eine Reaktionsflüssigkeit zu messen, umfassend:
einen Puffer (104) zum Halten einer Vielzahl von Probengestellen (111), wobei die Vielzahl von Probengestellen (111) dazu ausgelegt ist, eine Vielzahl von Proben in Probengefäßen im Bereitschaftszustand zu lagern;
eine Trägerlinie (102) zum Tragen der Vielzahl von Probengestellen (111) zu dem Puffer (104), wobei
der Puffer (104) dazu ausgelegt ist, die Vielzahl von Probengestellen (111), die von der Gestellträgerlinie (102) getragen werden, zu halten, so dass eine Abgabereihenfolge der Proben in den Probengestellen (111) modifizierbar ist, und
die Trägerlinie (102) ein Probengestell-ID-Lesegerät (102a) umfasst;
eine Analyseeinheit (105), die dazu konfiguriert ist, die Probe zu analysieren, umfassend:
eine Reagenzscheibe (110), auf der eine Vielzahl von Reagenzien, die in Reagenzflaschen gelagert sind, montierbar ist,
ein Reagenztablett (114) zum Halten einer Reagenzflasche,
eine Informationserfassungseinheit (115), die dazu konfiguriert ist, Reagenzinformationen durch Lesen einer Reagenz-ID zu erfassen, die der Reagenzflasche, die auf das Reagenztablett (114) geladen ist, gegeben ist,
einen Reagenzlader (116), der dazu konfiguriert ist, einen Transport der Reagenzflasche, die auf das Reagenztablett (114) geladen ist, in die Reagenzscheibe (110) auszuführen,
eine Reaktionsscheibe (108), die eine Vielzahl von Reaktionsgefäßen beinhaltet,
eine Reagenzabgabedüse (109) zum Abgeben des Reagens aus der Reagenzflasche in der Reagenzscheibe (110) in ein Reaktionsgefäß der Reaktionsscheibe (108), und
eine Probenabgabedüse (107), die dazu konfiguriert ist, durch Rotation oder vertikale Bewegung angetrieben zu werden, um die Probe aus dem Probengefäß in das Reaktionsgefäß auf der Reaktionsscheibe (108) abzugeben;
eine Förderlinie (106) zum Tragen eines Probengestells (111) aus dem Puffer (104) in die Analyseeinheit (105);
eine Anzeigeeinheit (118); und
eine Steuereinheit (130), beinhaltend:
eine Bestimmungseinheit (117), die dazu konfiguriert ist, zu bestimmen, ob eine Kalibrierung des geladenen Reagens erforderlich ist oder nicht, wenn die Informationserfassungseinheit (115) das Reagens identifiziert,
eine Anforderungserzeugungseinheit (119), die dazu konfiguriert ist, durch die Anzeigeeinheit (118) zu benachrichtigen, dass eine Standardlösung für die Kalibrierung erforderlich ist, wenn die Bestimmungseinheit (117) eine Anforderung der Kalibrierung bestimmt, und eine Kalibrierungsanforderung zu erzeugen, wenn das Laden eines Kalibrierungsgestells mit der Standardlösung in den automatischen Analysator durch den Benutzer vom Probengestell-ID-Leser (102a) erkannt wurde, und
eine Planungseinheit (120), die dazu konfiguriert ist, den Transport und die Kalibrierung zu planen und die Kalibrierung, falls erforderlich, unmittelbar nach dem Transport der Reagenzflasche in die Reagenzscheibe (110) auszuführen, wobei
die Planungseinheit (120) eine Gestelltransportplanungseinheit (301) beinhaltet, wobei
die Gestelltransportplanungseinheit (301) eine Gestellzufuhrplanungstabelle (301a) zum Steuern von Informationen über die Vielzahl von Probengestellen (111) im Puffer (104) und die Analyseeinheit (105) beinhaltet, wobei die Gestelltransportplanungseinheit (301) dazu konfiguriert ist, das Probengestell (111) der Vielzahl von Probengestellen (111) zu bestimmen, das als Nächstes der Analyseeinheit (105) zuzuführen ist, und
wobei die Planungseinheit (120) dazu konfiguriert ist, dem Kalibrierungsgestell die höchste Priorität für die Analyse zu geben, damit es der Analyseeinheit (105) zugeführt wird.

## Revendications

1. Analyseur automatique, dans lequel un échantillon et un réactif sont respectivement distribués dans un récipient de réaction, dans lequel l'échantillon et le réactif sont amenés à réagir pour mesurer un liquide de réaction, comprenant :
un tampon (104) pour maintenir une pluralité de porte-échantillons (111), dans lequel la pluralité de porte-échantillons (111) est adaptée pour stocker une pluralité d'échantillons dans des récipients d'échantillons en attente ;
une ligne de transport (102) pour transporter la pluralité de porte-échantillons (111) jusqu'au tampon (104), dans lequel
le tampon (104) est adapté pour maintenir la pluralité de porte-échantillons (111) transportés par la ligne de transport de porte-échantillons (102) de sorte qu'un ordre de distribution des échantillons dans les porte-échantillons (111) est modifiable, et
la ligne de transport (102) comprend un lecteur d'identification de porte-échantillons (102a) ;
une unité d'analyse (105) configurée pour analyser l'échantillon, comprenant :
un disque de réactif (110) sur lequel une pluralité de réactifs stockés dans des bouteilles de réactif peuvent être montés,
un plateau de réactif (114) pour maintenir une bouteille de réactif,
une unité d'acquisition d'informations (115) configurée pour acquérir des informations de réactif en lisant une identification de réactif donnée à la bouteille de réactif chargée sur le plateau de réactif (114),
un chargeur de réactif (116) configuré pour exécuter un transport de la bouteille de réactif chargée sur le plateau de réactif (114) dans le disque de réactif (110),
un disque de réaction (108) incluant une pluralité de récipients de réaction,
une buse de distribution de réactif (109) pour distribuer le réactif à partir de la bouteille de réactif dans le disque de réactif (110) dans un récipient de réaction du disque de réaction (108), et
une buse de distribution d'échantillon (107) est configurée pour être entraînée par rotation ou mouvement vertical pour distribuer l'échantillon à partir du récipient d'échantillon dans le récipient de réaction sur le disque de réaction (108) ;
une ligne de transport (106) pour transporter un porte-échantillons (111) à partir du tampon (104) dans l'unité d'analyse (105) ;
une unité d'affichage (118) ; et
une unité de commande (130) incluant :
une unité de détermination (117) configurée pour déterminer si un étalonnage du réactif chargé est requis ou non lorsque l'unité d'acquisition d'informations (115) identifie le réactif,
une unité de génération de demande (119) configurée pour notifier, par l'unité d'affichage (118), qu'une solution standard est requise pour l'étalonnage lorsque l'unité de détermination (117) détermine une exigence de l'étalonnage, et pour générer une demande d'étalonnage lorsque le chargement dans l'analyseur automatique d'un porte-échantillons ayant la solution standard, a été reconnu par l'utilisateur à partir du lecteur d'identifiant de porte-échantillons (102a), et
une unité de planification (120) configurée pour planifier le transport et l'étalonnage, et pour exécuter l'étalonnage, si nécessaire, immédiatement après le transport de la bouteille de réactif dans le disque de réactif (110), dans lequel
l'unité de planification (120) inclut une unité de planification de transport de porte-échantillons (301), dans lequel
l'unité de planification de transport de porte-échantillons (301) inclut une table de planification de fourniture de porte-échantillons (301a) pour commander des informations sur la pluralité de porte-échantillons (111) dans le tampon (104) et l'unité d'analyse (105), dans lequel l'unité de planification de transport de porte-échantillons (301) est configurée pour déterminer le porte-échantillons (111) de la pluralité de porte-échantillons (111) à fournir à côté de l'unité d'analyse (105), et
dans lequel l'unité de planification (120) est configurée pour donner la priorité la plus élevée pour l'analyse au porte-échantillons d'étalonnage pour être fourni à l'unité d'analyse (105).
